(19) Europäisches Patentamt
European Patent Office
Office européen des brevets

(11) **EP 3 006 513 B1**

## (12) EUROPEAN PATENT SPECIFICATION

(45) Date of publication and mention
of the grant of the patent:
**24.05.2017  Bulletin 2017/21**

(21) Application number: **13771548.8**

(22) Date of filing: **06.06.2013**

(51) Int Cl.:
***C09D 5/00*** *(2006.01)*

(86) International application number:
**PCT/ES2013/070368**

(87) International publication number:
**WO 2014/195529 (11.12.2014 Gazette 2014/50)**

(54) **HEAT-REFLECTIVE COMPOSITION**

HITZE-REFLEKTIERENDE ZUSAMMENSETZUNG

COMPOSITION THERMO-RÉFLÉCHISSANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.04.2016  Bulletin 2016/15**

(73) Proprietor: **Industrias Quimicas Satecma, S. A.
28529 Rivas Vaciamadrid (Madrid) (ES)**

(72) Inventor: **GARCIA-TENORIO BENITEZ, Jose
Alberto
E-28529 Rivas Vaciamadrid (Madrid) (ES)**

(74) Representative: **González López-Menchero,
Álvaro Luis
Protectia Patentes y Marcas, S.L.
C/ Arte 21, 2°A
28033 Madrid (ES)**

(56) References cited:
**EP-A1- 2 452 986        WO-A1-2012/007962
US-A1- 2005 126 441**

**Description**

The present invention relates to a component for coating compositions, specifically, a thermal insulating and waterproofing component for acrylic coating compositions. It also relates to the acrylic coating compositions which contain this component, as well as to the use of the cited component as filler in an acrylic coating composition, and to the use of said coating composition to obtain highly reflective substrata with insulating properties.

Thus, the use of the invention falls within the field of waterproofing and thermal insulating acrylic coatings, and may be applied to all types of substrata which require special protection against humidity and high temperatures, for example roofs and fibro-cement covers, roof tiles, metal plates, mortar, etc., in homes, industrial and livestock warehouses, storehouses, exterior roofs of vehicles, insulating walls or shields and the like. To this end, the waterproofing and thermal insulating component contains non-porous hollow spherical particles of glass, which, incorporated into an aqueous acrylic coating, makes it possible to obtain a surface coated by the formation of a waterproof and thermal insulating membrane, wherein the said spherical particles are compacted against each other, providing a thermal insulating, and a voluminous, homogenous and elastic waterproof membrane.

The coating composition which contains the waterproofing and thermal insulating component of the invention, effectively protects against the overheating of the surfaces or substrata upon which it is applied, whilst it reduces the thermal stress thereof, prolonging thus their useful life.

For example, in building construction and renovation works over the past few years, the use of materials which contribute to improve the energy efficiency and to diminish the greenhouse effect gas emission is prevailing. Therefore, many countries are proposing the use of materials and constructive systems, which enable a greater comfort indoors, which are able to reduce energy consumption coming from the use of air conditioning and cooling systems and achieving significant energy efficiency.

An example of the above is the installation of the so-called "cool roofs", which contribute significantly to an increased efficiency and to reduce energy consumption in buildings.

Cool roofs are designed to maintain low temperatures on their surface when sunlight falls on them, that being the main cause of roofs heating up.

Conventional roofs absorb 90% of incident solar energy and can therefore reach temperatures of up to approximately 70 °C. These high temperatures on the surface of the roof increase the heat flow towards the inside of the building, thereby increasing the cost of the energy consumed by air conditioning equipments. In contrast, cool roofs absorb less than 50% of incident energy from the sun, reducing the temperature of the roof and therefore, reducing the need for air conditioning inside.

Some of the advantages of the use of cool roofs are, for example, a reduction of energy consumption, improvements in the thermal comfort inside rooms which do not have air conditioning, a reduction of the temperature supported by the roof, thus increasing its useful life, since the materials suffer less thermal shock.

Cool roofs comprise surfaces that have the ability to reflect most of the solar radiation received and, furthermore, they emit efficiently a high percentage of the solar radiation absorbed, in such a way that its heating is prevented and, thus, greatly reduces the heat that is transmitted to the inside of the building. Solar reflectance and thermal emittance are two functions of the properties of the material which determine a roof's temperature.

Thus, solar reflectance is defined as the fraction of solar light (UV, Visible and Infrared) reflected by a surface, expressed on a scale of 0 to 1 or as a percentage from 0% to 100%. The solar light which is not reflected is absorbed as heat. A dark material reflects between 0 and 20% of the incident solar radiation. A light material reflects between 50 and 90%. Solar reflectance has the greatest effect on a surface in order to keep it cool under the sun. The greater the amount of light reflected on a surface, the cooler it will remain.

In turn, thermal emittance or emissivity is defined as a surface's ability to emit energy by being at a temperature, expressed on a scale of 0 to 1, where 0 is no emittance and 1 its maximum. Therefore, on the non-exposed face of an enclosure that is opaque to solar radiation, the emittance of the surface must be taken into account in order to characterize the thermal behavior of the assembly and on the exposed face, the effect of both the emittance and the solar reflectance must be considered.

In order to compare the cooling of the surface of a roof, the Solar Radiation Index (SRI) is applied, which is calculated based on the values of solar reflectance and thermal emittance. The higher its value, the longer the surface will remain cool under the sun and the less it will tend to heat up. Roofs which are made of dark materials have an SRI of between 0 and 20, whilst white colored surfaces reach 100. It is possible to reach values above 100, which means that the surface is cooler than the white reference.

In the USA, for example, the SRI values for a cool roof should be between 78 and 29 for both, low sloped roofs and steep sloped roofs respectively. The USA Department of Energy has decided to implement the construction of cool roofs throughout the whole country, wherever possible. The Energy Star programme specifies a minimum value of 65% of solar reflectance for low-sloped roofs and 25% for those that have a steep slope. The programme does not consider thermal emittance values.

Although the foregoing concepts, as previously defined, are specifically disclosed for a practical use in the field of construction, a person skilled in the art will understand that these can be equally applicable to the rest of the fields to which the invention may be applied; therefore the definitions given are equally valid in such fields.

EP 0804513, "Coating material with reflective properties in two wavelength ranges and absorbent properties in a third wavelength range", relates to a painting material having reflective properties in two wavelength ranges and absorbent properties in a third wavelength range, which, even when brightly colored in the visible spectrum, can obtain energy from the near infrared range of the solar spectrum, without giving it off again in the heat radiation range, as is usually the case. This material comprises, a binding agent with a transparency > 40% and a refractive index n < 2.0 in a wavelength range of 0.38 to 0.78 $\mu$m (first wavelength range), and in a wavelength range of 5 to 100 $\mu$m (third wavelength range), platelet-like first particles in an amount of 2 to 30% by weight, based on the wet weight of the painting substance, the thickness of which is < 10 $\mu$m, and the surface of which is > 100 $\mu$m$^2$, and have a reflecting power R in the third wavelength range of > 40%, and are covered at least partly, by third particles, which have, in the first and third wavelength range, a transparency of > 40% and, in a wavelength range of 0.8 to 2.5 $\mu$m (second wavelength range), an absorption of > 20%, the refractive index of which in the first wavelength range is greater than that of the binding agent, and the size of which is selected so that an optimum reflective effect is adjusted in the first wavelength range.

Document EP 0800558, "Agent for producing heat-reflecting coatings" describes a coating agent for producing heat-reflecting coatings which comprises binding agents, pigments, solvents and/or water, containing the following film-forming constituents: 1 to 8% by weight of one or more black pigments, 0.1 to 10% by weight of one or more colored pigments, 0 to 10% by weight of white pigment, 3 to 30% by weight of finely dispersed silicic acid, 0 to 25% by weight of other pigments and fillers, 40 to 85% by weight of binding agent and 0 to 10% by weight of lacquer additives.

EP 2130878, "Double layer coating, its preparation and its use for rendering ultra water-repellent and antireflective the surfaces to which it is applied" relates to a double layer coating comprising a lower layer of a photo/thermostable resin adherent to the surface to be coated, and an upper layer comprising functionalized micro-particles dispersed in a photo/thermostable resin, wherein said microparticles consist of silica or other metal oxides and exhibit on their surfaces functional groups of general formula - SiR$^3$, where each R is independent from the others, H, is a linear or branched C1-C30 alkyl chain, a linear or branched C2-C30 unsaturated alkyl chain, a linear or branched halo-alkyl C1-C30 chain, a vinyl group, a C6-C18 aromatic group, a C3-C30 epoxy-alkyl group, a linear or branched chain of structure $C_mH_{2m}X$ where m = 1-30 and X is chosen from CN, NR", SR", OR", O-C(O)-R", CO$_2$R", N-C(O)-R", R" being hydrogen, a linear or branched C1-C30 alkyl chain, a linear or branched C2-C30 unsaturated alkyl chain, a linear or branched C1-C30 halo-alkyl chain, a vinyl group, a C6-C18 aromatic group, a C3-C30 epoxy-alkyl group, a C1-C30 acyl group, an unsaturated C3-C30 acyl group, or a C6-C18 aromatic group.

One object of the present invention is to provide a component for coating compositions, in particular a waterproofing and thermal insulating component for acrylic coating components, which are highly reflective with insulating properties, containing hollow spherical particles of glass, titanium dioxide (TiO$_2$), calcium carbonate (CaCO$_3$) and barite (BaSO$_4$).

An additional object of the invention is an acrylic coating composition which contains the component described above as a filler, and which makes it possible to obtain a surface coated by the formation of a waterproof and thermal insulating membrane, and which effectively protects against the overheating of the surfaces or substrata on which it is applied, whilst reducing the thermal stress thereof, thus prolonging its useful life.

In the present description, the highly reflective and insulating component of the invention is interchangeably referred to as "component of the invention" or "filler of the invention". Likewise, the acrylic coating composition comprising the component of the invention is hereinafter referred to as "coating composition of the invention".

In accordance with the first object, the filler component of the invention consists of hollow spherical particles of glass, titanium dioxide (TiO$_2$), calcium carbonate (CaCO$_3$) and barite (BaSO$_4$).

Preferably, the filler component of the invention consists of hollow spherical particles of white glass with an average size of 55 $\mu$m and a conductivity of 0.05-0.26 W/m·K at 0 °C; titanium dioxide with an average particle size of 0.36 $\mu$m and color corresponding to CIELAB L* 99.4, a* - 0.5, b* 2; calcium carbonate, with an average particle size of 5 $\mu$m and color corresponding to CIELAB L* 98, a* 0.5 and b* 1.8; and barite, with a particle size of 3.5 $\mu$m, a 91% whiteness and a yellowness index of 1±0.5. In the present invention, CIELAB is CIE 1976 L*a*b*, the three parameters in the model represent the brightness of color (L*, L*=0 black yields and L*=100 indicates white), its position between red and green (a* negative values indicate green, whereas positive values indicate red) and its position between yellow and blue (b*, negative values indicate blue and positive values indicate yellow).

In one embodiment, the hollow spherical particles of glass have a density of 0.25 g/cm$^3$.

In another embodiment, a titanium dioxide having a purity level of at least 90%, a calcium carbonate having a purity level of at least 97% and a barite having a purity level of at least 97% are used as fillers. According to the invention the filler component comprises by weight percentages relative to the total filler component:

- between 25 and 30% of hollow glass spheres;

- between 32 and 36% of titanium dioxide;
- between 32 and 36% of calcium carbonate; and
- between 2 and 5% de barium sulfate.

In a preferred embodiment of the filler component of the invention, it contains, by weight percentages relative to the total filler component:

- 27.5% of hollow glass spheres;
- 34.5% of titanium dioxide;
- 34.5% of calcium carbonate; and
- 3.5% of barium sulfate.

In accordance with the second object, an acrylic coating composition of the invention comprises an aqueous dispersion of acrylic copolymers, which incorporate the filler described above, together with other additives and/or solvents commonly used in the art, such as dispersants, moisturizing agents, anti-foaming agents, preservatives, biocides, thickeners, inorganic and organic pigments, as well as other fillers and components commonly used in lacquers and coatings.

Preferably, the acrylic coating composition of the invention contains an aqueous dispersion at 50-60% of acrylic copolymers in a proportion of 50-65% by weight and the filler of the invention in a proportion of 20-35% by weight, percentages relative to the total weight of the composition.

Therefore, in a preferred embodiment, the coating composition of the invention comprises percentages by weight, relative to the total weight of the composition, expressed in the following Table 1:

**Table 1**

| Aqueous dispersion at 50-60% of acrylic copolymers | 50-65% |
|---|---|
| Filler of the invention | 20-35% |
| Polyacrylate dispersants | 0.1-0.5% |
| Moisturizing agents | 0.1-0.5% |
| Anti-foaming agents | 0.3-0.6% |
| Preservatives | 0.15-0.20% |
| Film protector biocides | 0.7-0.9% |
| Thickeners | 0.1-0.3% |
| Coalescing / cosolvent | 0.5-1.5% |

**Examples**

**Example 1: Obtaining a coating composition according to the invention**

A mixture of components, shown in Table 2 was prepared, in the following way: one part of the acrylic copolymers were loaded into a DISPERMIX stirrer, the additives were weighed and added while being stirred. The fillers and pigments were weighed and added while being stirred, maintaining the stirring for 15 minutes at 900-1,000 rpm. The remaining amount of acrylic copolymers were added and stirred at 800 rpm. Then the butyldiglycol and the described amount of hollow glass spheres were added gradually, until homogenization, after which the thickener was added while being stirred.

**Table 2**

| Aqueous dispersion at 50-60% of acrylic copolymers | 50-65% |
|---|---|
| Polyacrylate dispersants | 0.1-0.5% |
| Moisturizing agents | 0.1-0.5% |
| Anti-foaming agents | 0.3-0.6% |
| Preservatives | 0.15-0.20% |

(continued)

| | |
|---|---|
| Film protector biocides | 0.7-0.9% |
| Thickeners | 0.1-0.3% |
| Butyldiglycol | 1.0-2.0% |
| Hollow spheres of glass | 8.0-11.0% |
| Barium sulfate | 1.0-2.0% |
| Titanium dioxide | 10.0-15.0% |
| Calcium carbonate | 10.0-13.0% |

**Example 2: Variability of temperature on various substrata surfaces**

The composition of the coating described above was applied on three different roofs, the first made of galvanized plates (T1), the second provided with asphalt pre-treatment (T2), both for comparative purposes, and the third (T3) coated with the composition of the invention under the environmental conditions of temperature and humidity shown in the following Table 3:

**Table 3**

| Time | Environmental temperature (°C) | Relative humidity of the air (%) | T1 (°C) plate | T2 (°C) asphaltic | **Table 8** |
|---|---|---|---|---|---|
| 8:45 | 22.0 | 40 | 22 | 22 | **Table 8** |
| 9:00 | 22.8 | 40 | 29 | 32 | **Table 8** |
| 10:00 | 26.6 | 38 | 39 | 45 | **Table 8** |
| 11:00 | 27.1 | 36 | 44 | 53 | **Table 8** |
| 12:00 | 29.5 | 35 | 50 | 61 | **Table 8** |
| 13:00 | 29.6 | 34 | 52 | 63 | **Table 8** |
| 14:00 | 31.7 | 29 | 53 | 64 | **Table 8** |
| 16:00 | 33.0 | 28 | 55 | 65 | **Table 8** |
| 17:00 | 31.5 | 29 | 53 | 60 | **Table 8** |

As seen in the data shown, the roof coated with the coating composition of the invention kept the roof at substantially lower temperatures in contrast to the comparative coatings.

| T1 Plate | T2 asphaltic | T3 according to the invention | |
|---|---|---|---|
| T (°C) | T (°C) | ΔT relative to T1 (°C) | ΔT relative to T2 (°C) |
| 22 | 22 | **0** | **0** |
| 29 | 32 | **-6** | **-9** |
| 39 | 45 | **-11** | **-17** |
| 44 | 53 | **-12** | **-21** |
| 50 | 61 | **-15** | **-26** |
| 52 | 63 | **-16** | **-27** |
| 53 | 64 | **-16** | **-27** |
| 55 | 65 | **-15** | **-25** |
| 53 | 60 | **-14** | **-21** |

**Example 3: Solar reflectance test**

A test was carried out to determine the solar reflectance of the sample plates, of 100x100 mm, coated with a coating composition according to the blank invention under ASTM E903-96 (Standard Test Method for Solar Absorptance, Reflectance, and Transmittance of Materials Using Integrating Spheres), ISO9050:2003 (Glass in building - Determination of light transmittance, solar direct transmittance, total solar energy transmittance, ultraviolet transmittance and related glazing factors) and UNE-EN 410:1998 (Glass in building. Determination of the luminous and solar characteristics of glazing).

The reflectance was determined between 280 and 2,500 nm using a spectrophotometer from Perkin-Elmer, available as the Lambda 900 UVNISIN/R Spectrometer, which has an integrator of 150 mm in diameter. The method used has the following characteristics:

- Wavelength range: 5 nm
- Scanning speed: 250 nm/min
- UVA/IS slit: 1
- NIR detector gain: 4

Six spectral reflectance measurements of the sample received were carried out, calculating the average thereof. From the average of spectral reflectance of the sample, the solar reflectance was calculated using the selected ordinate method: the ordinate selection was taken from the direct solar normal irradiance values specified in table 3 of the ASTM E 891-87 (Reapproved 1992), "Standard Tables for Terrestrial Direct Normal Solar Spectral Irradiance for Air Mass1.5". The reflectance measurement was weighted using forty nine points of the fifty contained within said table, since the determination of the reflectance was performed up to a wavelength of 2,500 nm. Similarly, the solar reflectance was calculated using the following spectral distribution of solar radiation and the procedures described in the reference standards:

- Normalized relative spectral distribution of solar radiation observed in ISO standard 9050:2003 "Glass in building - Determination of light transmittance, solar energy transmittance, ultraviolet transmittance and related glazing factors". This relative spectral distribution of global solar radiation (direct and diffused) is calculated from the values for an air mass equal to 1.5.
- Normalized relative spectral distribution of solar radiation observed in UNE-EN standard 410:1998 "Glass in building. Determination of luminous and solar characteristics of glazing". This relative spectral distribution of global solar radiation (direct and diffused) is calculated based on the values for an air mass equal to 1; water content as condensation equal to 1.42 cm; ozone content equal to 0.34 cm, in normalized pressure and temperature conditions; reflectance (albedo) of ground reflected solar radiation equal to 0.2 and; spectral extinction by aerosols, at $\lambda = 500$ nm, equal to 0.1.

The results obtained are shown below:

| ASTM E903-96 | $86.8 \pm 0.1$ |
|---|---|
| ISO 9050:2003 | $85.5 \pm 0.3$ |
| UNE-EN 410:1998 | $84.2 \pm 0.3$ |

**Example 4: Indoor temperature reduction test**

A test was carried out to measure the reduction of the indoor environment temperature and the temperature of the surface of the ceiling of three hollow metal cubes made from galvanized steel (with sides measuring 405 mm and plates of 1 mm in thickness), formed by five faces, one of the faces open and resting on a thermal insulator of 3 cm in thickness, sealing the entire perimeter in contact with the edges.

One of the cubes was coated with the composition of the invention on the face opposite to the opening, as a roof, a second cube was coated in the same way on all its faces, and a third cube was left uncoated, as a reference. On all of the cubes, a hole of 7 mm in diameter was made on one of their side faces, in order to insert a metal rod supporting a temperature probe at the central point of the cube, which enabled measuring the temperature at the inside centre of the cube. A second probe was attached to the surface on the centre of the ceiling of the cube, in order to measure the temperature of the surface. The probes used were type T thermocouples (copper/copper-nickel) and they were read every 5 minutes throughout the entire time of the test.

In a first test, the inner temperature of the metal cube with only the roof coated was compared to the uncoated metal cube by exposing them to the elements for 24 hours, initial environmental temperature of 31 °C and 50% relative humidity of the air. In a second test, the inner temperature of the metal cube with all its faces coated was compared to the uncoated cube, also by exposing them the elements, initial environmental temperature of 27.5 °C and 52% relative humidity of the air.

*Temperature variation of the metal cube coated only on the roof, with reference to the uncoated metal cube.*

A minimum internal temperature difference of 2 °C and a maximum internal temperature of 6 °C were obtained from the measurements carried out inside the cube; ceiling surface temperatures ranged between 5 °C and 22 °C.

*Temperature variation of the metal cube coated all its faces, with reference to the uncoated metal cube.*

A internal temperature difference of 2 °C to 10 °C was obtained inside each cube at its central point and of 2 °C and 17 °C on the inside surface of each one of the ceilings of the cubes.

**Example 5: Solar radiation index**

A test was carried out to calculate the solar radiation index SRI under ASTM E1980-01 "Standard Practice for Calculating Solar Reflectance Index of Horizontal and Low-Sloped Opaque Surfaces" on sample plates, of 100x100 mm, coated with a coating composition according to the blank invention.

In order to do this, the solar reflectance (see Example 3) and emissivity data (under ASTM C1371-04a "Standard Test Method for Determination of Emittance of Materials Near Room Temperature Using Portable Emissometers") were previously obtained:

$$\text{Solar reflectance} = 86.8 \pm 0.1 \ (\%); \ \text{Emissivity} = 0.82 \pm 0.02$$

For these values, the SRI index was calculated for different convection coefficients. The results are shown below:

| Convection coefficient | SRI |
|---|---|
| Low (0-2 m/s) | $107.6 \pm 0.2$ |
| Medium (2-6 m/s) | $108.0 \pm 0.2$ |
| High (6-10 m/s) | $108.4 \pm 0.2$ |

These values indicate that, for example, a roof coated with the composition of the invention is able to keep its surface cool. The values of the SRI show that they are above the maximum of the scale, implying that the surface will remain much cooler than if it were not coated, since any typical material for covers, asphalt sheets, mortar, tiles, white acrylic coatings, etc., have very low solar reflectance values compared to the values shown herein. The comparative SRI values range from 22 for asphalt sheets and 36 for red tiles or 56 for aluminum sheets. A conventional white coating will have a solar reflectance of 0.8 and a maximum SRI value of 100.

The coating composition of the invention, thanks to its filler component, makes it possible to reach SRI values of up to 108.4 and, upon having a reflectance value of 86.80%, it will be reflecting most of the solar radiation, therefore, combined with the emittance value of 0.82, it will transmit less heat to the surface on which it is applied, but more than enough to the exterior, which contributes to keeping said surface cooler.

**Claims**

1. Component for acrylic coating compositions comprising hollow spherical particles of glass, titanium dioxide ($TiO_2$), calcium carbonate ($CaCO_3$) and barite ($BaSO_4$), in a weight percentage relative to the total of the component:

   - between 25 and 30% of hollow glass spheres;
   - between 32 and 36% of titanium dioxide;
   - between 32 and 36% of calcium carbonate; and
   - between 2 and 5% de barium sulfate.

2. Component for acrylic coating compositions according to claim 1, **characterized in that** it comprises, in a weight percentage relative to the total of the component:

- 27.5% of hollow glass spheres;
- 34.5% of titanium dioxide;
- 34.5% of calcium carbonate; and
- 3.5% of barium sulfate.

3.  Component for acrylic coating compositions according to claims 1 to 2, **characterized in that** the hollow glass spheres have an average particle size of 55 $\mu$m and a conductivity of 0.05-0.26 W/m·K measured at 0 °C.

4.  Component for acrylic coating compositions according to claims 1 to 2, **characterized in that** the titanium dioxide has an average particle size of 0.36 $\mu$m.

5.  Component for acrylic coating compositions according to claims 1 to 2, **characterized in that** the calcium carbonate has an average particle size of 5 $\mu$m.

6.  Component for acrylic coating compositions according to claims 1 to 2, **characterized in that** the barium sulfate has an average particle size of 3.5 $\mu$m.

7.  Component for acrylic coating compositions according to claims 1 to 2, **characterized in that** the hollow glass spheres have a density of 0.25 g/cm$^3$.

8.  Component for acrylic coating compositions according to claims 1 to 2, **characterized in that** the titanium dioxide exhibits a color corresponding to CIELAB L* 99.4, a* -0.5 and b* 2.0.

9.  Component for acrylic coating compositions according to claims 1 to 2, **characterized in that** the calcium carbonate exhibits a color corresponding to CIELAB L* 98, a* 0.5 and b* 1.8.

10. Component for acrylic coating compositions according to claims 1 to 2, **characterized in that** the barium sulfate exhibits a whiteness of 91% and a yellowness index of 1±0.5.

11. Component for acrylic coating compositions according to claims 1 to 2, **characterized in that** the titanium dioxide has a purity level of at least 90%.

12. Component for acrylic coating compositions according to claims 1 to 2, **characterized in that** the calcium carbonate has a purity level of at least 97%.

13. Component for acrylic coating compositions according to claims 1 to 2, **characterized in that** the barium sulfate has a purity level of at least 97%.

14. Acrylic coating composition comprising an aqueous dispersion of acrylic copolymers, **characterized in that** it incorporates a component according to any of the claims 1 to 13, as a filler.

15. Acrylic coating composition comprising an aqueous dispersion of acrylic copolymers according to claim 14, **characterized in that** it comprises an aqueous dispersion at 50-60% of acrylic copolymers in a proportion of 50-65% by weight and the filler in a proportion of 20-25% by weight, percentages relative to the total weight of the composition.

16. Acrylic coating composition comprising an aqueous dispersion of acrylic copolymers according to claim 14, **characterized in that** furthermore, it contains other additives and/or solvents selected from among dispersants, moisturizing agents, anti-foaming agents, preservatives, film protector biocides, thickeners, fillers and components commonly used in lacquers and coatings.

17. Acrylic coating composition comprising an aqueous dispersion of acrylic copolymers according to claim 16, **characterized in that** it comprises, relative to the total weight of the composition, 50-65% of an aqueous dispersion at 50-60% of acrylic copolymers; 20-35% of a filler according to any of the claims 1 to 13; 0.1-0.5% of polyacrylate dispersants; 0.1-0.5% of moisturizing agents; 0.3-0.6% of anti-foaming agents; 0.15-0.20% of preservatives; 0.7-0.9% of film protector biocides and 0.1-0.3% of thickeners.

18. Acrylic coating composition comprising an aqueous dispersion of acrylic copolymers according to any of the claims 13-17, **characterized in that** it has a solar reflection index SRI under ASTM E1980-01 of up to 108.4; a reflectance value of 86.80% under ASTM E903-96; and an emittance value of 0.82, under ISO9050:2003.

**19.** Use of a component according to any of the claims 1 to 13, as a filler for obtaining an insulating and reflective acrylic coating composition, with a solar reflection index SRI, under ASTM E1980-01 of up to 108.4, a reflectance value under ASTM E903-96 of 86.80%; and an emittance value of 0.82, under ISO9050:2003.

**20.** Use of a coating composition according to claims 14 to 18 for obtaining highly reflective coated substrata and with insulating properties.

## Patentansprüche

**1.** Komponente für Acrylbeschichtungszusammensetzungen, umfassend hohle, kugelförmige Glaspartikel, Titandioxid ($TiO_2$), Calciumcarbonat ($CaCO_3$) und Baryt ($BaSO_4$) in Gewichtsprozent bezüglich der Gesamtmenge der Komponente:

- zwischen 25 und 30 % Hohlglaskugeln;
- zwischen 32 und 36 % Titandioxid;
- zwischen 32 und 36 % Calciumcarbonat und
- zwischen 2 und 5 % Bariumsulfat.

**2.** Komponente für Acrylbeschichtungszusammensetzungen nach Anspruch 1, **dadurch gekennzeichnet, dass** es in Gewichtsprozent bezüglich der Gesamtmenge der Komponente Folgendes umfasst:

- 27,5 % Hohlglaskugeln;
- 34,5 % Titandioxid;
- 34,5 % Calciumcarbonat; und
- 3,5 % von Bariumsulfat.

**3.** Komponente für Acrylbeschichtungszusammensetzungen nach Anspruch 1 bis 2, **dadurch gekennzeichnet, dass** die Hohlglaskugeln eine durchschnittliche Teilchengröße von 55 $\mu$m und eine bei 0 °C gemessene Leitfähigkeit von 0,05 bis 0,26 W/m·K aufweisen.

**4.** Komponente für Acrylbeschichtungszusammensetzungen nach Anspruch 1 bis 2, **dadurch gekennzeichnet, dass** das Titandioxid eine durchschnittliche Teilchengröße von 0,36 $\mu$m aufweist.

**5.** Komponente für Acrylbeschichtungszusammensetzungen nach Anspruch 1 bis 2, **dadurch gekennzeichnet, dass** das Calciumcarbonat eine durchschnittliche Teilchengröße von 5 $\mu$m aufweist.

**6.** Komponente für Acrylbeschichtungszusammensetzungen nach Anspruch 1 bis 2, **dadurch gekennzeichnet, dass** das Bariumsulfat eine durchschnittliche Teilchengröße von 3,5 $\mu$m aufweist.

**7.** Komponente für Acrylbeschichtungszusammensetzungen nach Anspruch 1 bis 2, **dadurch gekennzeichnet, dass** die Hohlglaskugeln eine Dichte von 0,25 g/cm$^3$ aufweisen.

**8.** Komponente für Acrylbeschichtungszusammensetzungen nach Anspruch 1 bis 2, **dadurch gekennzeichnet, dass** das Titandioxid eine Farbe entsprechend CIELAB L* 99,4, a* -0,5 und b* 2,0 besitzt.

**9.** Komponente für Acrylbeschichtungszusammensetzungen nach Anspruch 1 bis 2, **dadurch gekennzeichnet, dass** das Calciumcarbonat eine Farbe entsprechend CIELAB L* 98, a* 0,5 und b* 1,8 besitzt.

**10.** Komponente für Acrylbeschichtungszusammensetzungen nach Anspruch 1 bis 2, **dadurch gekennzeichnet, dass** das Bariumsulfat einen Weißgrad von 91 % und einen Vergilbungsindex von 1$\pm$0,5 besitzt.

**11.** Komponente für Acrylbeschichtungszusammensetzungen nach Anspruch 1 bis 2, **dadurch gekennzeichnet, dass** das Titandioxid einen Reinheitsgrad von mindestens 90 % aufweist.

**12.** Komponente für Acrylbeschichtungszusammensetzungen nach Anspruch 1 bis 2, **dadurch gekennzeichnet, dass** das Calciumcarbonat einen Reinheitsgrad von mindestens 97 % aufweist.

13. Komponente für Acrylbeschichtungszusammensetzungen nach Anspruch 1 bis 2, **dadurch gekennzeichnet, dass** das Bariumsulfat einen Reinheitsgrad von mindestens 97 % aufweist.

14. Acrylbeschichtungszusammensetzung, umfassend eine wässrige Dispersion von Acrylcopolymeren, **dadurch gekennzeichnet, dass** sie eine Komponente nach einem der Ansprüche 1 bis 13 als Füllstoff integriert.

15. Acrylbeschichtungszusammensetzung, umfassend eine wässrige Dispersion von Acrylcopolymeren nach Anspruch 14, **dadurch gekennzeichnet, dass** sie eine wässrige Dispersion mit 50 bis 60 % von Acrylcopolymeren mit einem Anteil von 50 bis 65 Gew% und den Füller mit einem Anteil von 20 bis 25 Gew% umfasst, wobei die prozentualen Anteile bezüglich des Gesamtgewichts der Zusammensetzung sind.

16. Acrylbeschichtungszusammensetzung, umfassend eine wässrige Dispersion von Acrylcopolymeren nach Anspruch 14, **dadurch gekennzeichnet, dass** sie außerdem andere Zusatzstoffe und/oder Lösungsmittel, ausgewählt aus Dispergiermitteln, Befeuchtungsmitteln, Entschäumungsmitteln, Konservierungsmitteln, Bioziden für Schutzschichten, Verdickungsmitteln, Füllstoffen und Komponenten, die gemeinhin in Lacken und Beschichtungen verwendet werden, enthält.

17. Acrylbeschichtungszusammensetzung, umfassend eine wässrige Dispersion von Acrylcopolymeren nach Anspruch 16, **dadurch gekennzeichnet, dass** sie bezüglich des Gesamtgewichts der Zusammensetzung 50 bis 65 % einer wässrigen Dispersion mit 50 bis 60 % von Acrylcopolymeren, 20 bis 35 % eines Füllstoffs nach einem der Ansprüche 1 bis 13, 0,1 bis 0,5 % Polyacrylat-Dispergiermittel; 0,1 bis 0,5 % Befeuchtungsmittel; 0,3 bis 0,6 % Entschäumungsmittel; 0,15 bis 0,20 % Konservierungsmittel; 0,7 bis 0,9 % Biozide für Schutzschichten und 0,1 bis 0,3 % Verdickungsmittel umfasst.

18. Acrylbeschichtungszusammensetzung, umfassend eine wässrige Dispersion von Acrylcopolymeren nach einem der Ansprüche 13 bis 17, **dadurch gekennzeichnet, dass** sie einen Sonnenreflexionsindex SRI von bis zu 108,4 unter ASTM E1980-01, einen Reflexionswert von 86,80 % unter ASTM E903-96 und einen Emissionsgradwert von 0,82 unter ISO9050:2003 aufweist.

19. Verwendung einer Komponente nach einem der Ansprüche 1 bis 13 als ein Füllstoff zum Erhalten einer isolierenden und reflektierenden Acrylbeschichtungszusammensetzung mit einem Sonnenreflexionsindex SRI unter ASTM E1980-01 von bis zu 108,4, einem Reflexionswert unter ASTM E903-96 von 86,80 % und einem Emissionsgradwert von 0,82 unter ISO9050:2003.

20. Verwendung einer Beschichtungszusammensetzung nach den Ansprüchen 14 bis 18 zum Erhalten hochreflektierender, beschichteter Substrate und mit isolierenden Eigenschaften.

**Revendications**

1. Composant pour des compositions de revêtement acrylique comprenant des particules sphériques creuses en verre, du dioxyde de titane ($TiO_2$), du carbonate de calcium ($CaCO_3$) et de la barite ($BaSO_4$), en pourcentage en poids par rapport au total du composant :

   - entre 25 et 30 % de sphères creuses en verre ;
   - entre 32 et 36 % de dioxyde de titane ;
   - entre 32 et 36 % de sphères de carbonate de calcium ; et
   - entre 2 et 5 % de sulfate de baryum.

2. Composant pour des compositions de revêtement acrylique, selon la revendication 1, **caractérisé en ce qu'**il comprend, en pourcentage en poids par rapport au total du composant :

   - 27,5 % de sphères creuses en verre ;
   - 34,5 % de dioxyde de titane ;
   - 34,5 % de carbonate de calcium ; et
   - 3,5 % de sulfate de baryum.

**3.** Composant pour des compositions de revêtement acrylique, selon les revendications 1 à 2, **caractérisé en ce que** les sphères creuses en verre ont une taille moyenne des particules de 55 μm et une conductivité de 0,05-0,26 W/m·K mesurée à 0 °C.

**4.** Composant pour des compositions de revêtement acrylique, selon les revendications 1 à 2, **caractérisé en ce que** le dioxyde de titane a une taille moyenne des particules de 0,36 μm.

**5.** Composant pour des compositions de revêtement acrylique, selon les revendications 1 à 2, **caractérisé en ce que** le carbonate de calcium a une taille moyenne des particules de 5 μm.

**6.** Composant pour des compositions de revêtement acrylique, selon les revendications 1 à 2, **caractérisé en ce que** le sulfate de baryum a une taille moyenne des particules de 3,5 μm.

**7.** Composant pour des compositions de revêtement acrylique, selon les revendications 1 à 2, **caractérisé en ce que** les sphères creuses en verre ont une densité de 0,25 g/cm$^3$.

**8.** Composant pour des compositions de revêtement acrylique, selon les revendications 1 à 2, **caractérisé en ce que** le dioxyde de titane présente une couleur selon le système CIELAB de L* 99,4, a* -0,5 et b* 2,0.

**9.** Composant pour des compositions de revêtement acrylique, selon les revendications 1 à 2, **caractérisé en ce que** le carbonate de calcium présente une couleur selon le système CIELAB de L* 98, a* 0,5 et b* 1,8.

**10.** Composant pour des compositions de revêtement acrylique, selon les revendications 1 à 2, **caractérisé en ce que** le sulfate de baryum présente une blancheur de 91 % et un indice de jaunissement de 1 ± 0,5.

**11.** Composant pour des compositions de revêtement acrylique, selon les revendications 1 à 2, **caractérisé en ce que** le dioxyde de titane possède un degré de pureté d'au moins 90 %.

**12.** Composant pour des compositions de revêtement acrylique, selon les revendications 1 à 2, **caractérisé en ce que** le carbonate de calcium possède un degré de pureté d'au moins 97 %.

**13.** Composant pour des compositions de revêtement acrylique, selon les revendications 1 à 2, **caractérisé en ce que** le sulfate de baryum possède un degré de pureté d'au moins 97 %.

**14.** Composition de revêtement acrylique comprenant une dispersion aqueuse de copolymères acryliques, **caractérisée en ce qu'**elle incorpore un composant, selon l'une quelconque des revendications 1 à 13, en tant que charge.

**15.** Composition de revêtement acrylique comprenant une dispersion aqueuse de copolymères acryliques, selon la revendication 14, **caractérisée en ce qu'**elle comprend une dispersion aqueuse à 50-60 % de copolymères acryliques, dans une proportion de 50-65 % en poids et la charge dans une proportion de 20-25 % en poids, les pourcentages étant liés au poids total de la composition.

**16.** Composition de revêtement acrylique comprenant une dispersion aqueuse de copolymères acryliques, selon la revendication 14, **caractérisée en ce qu'**en outre, elle contient d'autres additifs et/ou solvants choisis parmi des dispersants, des agents hydratants, des agents anti-mousse, des agents conservateurs, des biocides de protection de films, des épaississants, des charges et des composants couramment utilisés pour des laques et des revêtements.

**17.** Composition de revêtement acrylique comprenant une dispersion aqueuse de copolymères acryliques, selon la revendication 16, **caractérisée en ce qu'**elle comprend, par rapport au poids total de la composition, 50-65 % d'une dispersion aqueuse à 50-60 % de copolymères acryliques ; 20-35 % d'une charge selon l'une quelconque des revendications 1 à 13 ; 0,1-0,5 % de dispersants de polyacrylate ; 0,1-0,5 % d'agents hydratants ; 0,3-0,6 % d'agents anti-mousse; 0,15-0,20 % d'agents conservateurs; 0,7-0,9 % de biocides de protection de films et 0,1-0,3 % d'épaississants.

**18.** Composition de revêtement acrylique comprenant une dispersion aqueuse de copolymères acryliques, selon l'une quelconque des revendications 13-17, **caractérisée en ce qu'**elle possède un indice de réflexion solaire IRS de 108,4 maximum, selon la norme ASTM E1980-01 ; une valeur de réflectance de 86,80 % selon la norme ASTM E903-96 ; et une valeur d'émittance de 0,82, selon la norme ISO9050 :2003.

**19.** Utilisation d'un composant selon l'une quelconque des revendications 1 à 13, en tant que charge pour l'obtention d'une composition de revêtement acrylique isolante et réfléchissante, avec un indice de réflexion solaire IRS de 108,4 maximum, selon la norme ASTM E1980-01 ; une valeur de réflectance de 86,80 %, selon la norme ASTM E903-96 ; et une valeur d'émittance de 0,82, selon la norme ISO9050 :2003.

**20.** Utilisation d'une composition de revêtement, selon les revendications 14 à 18, pour l'obtention de substrats revêtus hautement réfléchissants et avec des propriétés isolantes.

**EP 3 006 513 B1**

**REFERENCES CITED IN THE DESCRIPTION**

**Patent documents cited in the description**

- EP 0804513 A
- EP 0800558 A
- EP 2130878 A